Europäisches Patentamt

European Patent Office

Office européen des brevets

(19)

(11) Veröffentlichungsnummer: **0 105 020**
**A1**

(12) **EUROPÄISCHE PATENTANMELDUNG**

(21) Anmeldenummer: 83710053.6

(22) Anmeldetag: 05.08.83

(51) Int. Cl.³: **G 01 B 17/02**

(30) Priorität: 29.09.82 DE 3236036

(43) Veröffentlichungstag der Anmeldung:
04.04.84 Patentblatt 84/14

(84) Benannte Vertragsstaaten:
FR GB IT SE

(71) Anmelder: Krautkrämer GmbH
Luxemburger Strasse 449
D-5000 Köln 41(DE)

(71) Anmelder: Elbatainer Kunststoff- und
Verpackungsgesellschaft mbH
Hertzstrasse 24-30
D-7505 Ettlingen(DE)

(72) Erfinder: Hense, Wolfgang
Hainbachstrasse 23
D-6721 Schwegenheim(DE)

(72) Erfinder: Buchscheidt, Kurt
Haydnstrasse 11
D-7505 Ettlingen(DE)

(72) Erfinder: Hartmann, Peter
Wilhelm-Leuschner Strasse 2
D-6800 Mannheim 1(DE)

(54) Verfahren zur Ultraschallmessung der Wandstärke von Kunststoffhohlkörpern.

(57) Zur Ultraschallmessung der Wandstärke von Kunststoff-Hohlkörpern ist an einer Stelle oder an mehreren Stellen in der die Außenkontur des Kunststoffhohlkörpers bestimmenden Form (1) ein Ultraschall-Wandler (5) eingebaut, der während des Herstellungsvorganges direkt und trocken an der Oberfläche des Kunststoffhohlkörpers (2) ankoppelt und dessen Wandstärke mißt.

Die Ultraschallmessung wird von einem Zeitpunkt ab durchgeführt, an dem sich eine im Herstellungszyklus stets wiederholende Temperatur im Inneren des Kunststoffhohlkörpers (2) eingestellt hat, bei der er noch plastisch verformbar ist und die gemessenen Wandstärkenwerte werden über einen Soll-Ist-Vergleich mit vorgegebenen Sollwerten verglichen und die Abweichsignale werden zur Nachregulierung der Schlauchdüse (3) nutzbar gemacht.

FIG.1

10 506

Beschreibung

Die Erfindung betrifft ein Verfahren zur Ultraschallmessung der Wandstärke von Kunststoffhohlkörpern.

Der Anteil von Kunststofferzeugnissen steigt in sämtlichen Industriezweigen stetig. Dabei werden für die Luft- und Raumfahrt, aber auch für die Kraftfahrzeugausrüstung, einerseits immer kompliziertere und hochwertigere Teile verlangt, die andererseits in großen Stückzahlen wirtschaftlich herzustellen sind. Die Anforderungen an die Qualität und an die Sicherheit solcher Teile ist durchweg hoch und damit ergibt sich die Notwendigkeit ständiger Kontrolle.

Nach dem bekannten Stand der Technik erfolgten beispielsweise zur Wandstärkenkontrolle stichprobenartige Messungen mit Mikrometerschraube und Meßuhr. Dabei wurden die Kunststoffhohlkörper auseinandergeschnitten und in der Nähe des Schnittrandes die vorhandene Wandstärke gemessen. Diese manuelle Methode ist jedoch mit Fehlern behaftet, sie verlangt erheblichen Personalaufwand und sie ist zu langsam, im Vergleich zur Ausstoßleistung moderner Kunststoff-Verarbeitungsmaschinen. Die Meßergebnisse hinkten der Produktion zu lange hinterher und bei Feststellung eines Fehlers mußten stets zu viele Fertigteile ausgeschieden werden.

Eine gewisse Abhilfe und Verbesserung brachte hier der Einsatz des vor allem aus der zerstörungsfreien Werkstoffprüfung bekannten Ultraschallmessens. Dabei werden mit Hilfe eines elektroakustischen Wandlers Ultraschallimpulse erzeugt, die in das zu prüfende Werkstück gelangen und von der Rückseite dieses Werkstückes reflektiert werden.

Diese reflektierten Impulse gelangen wieder zu dem elektroakustischen Wandler und werden in entsprechende elektrische
Signale umgewandelt. Aus der Zeit $\triangle$t, die zwischen dem Eintreten
der Schallimpulse in das Werkstück und dem Austreten der an der
Rückseite reflektierten Impulse aus dem Werkstück vergeht, kann
dann die Wandstärke D aus der Beziehung:

$$D = \frac{1}{2} \; c \cdot \triangle \; t \qquad (1)$$

ermittelt werden, wobei c die Schallgeschwindigkeit des Werkstückes
bedeutet. Damit konnten jetzt Fertigteile zerstörungsfrei, schneller
und unter verringertem Personalaufwand kontrolliert werden. Der
hauptsächliche Nachteil aber, der in der relativ langen Zeitspanne
zwischen Fertigstellung des Prüflings und Vorliegen der Meßergebnisse besteht, in der die Produktion weiterläuft, konnte auch
mit dem Einsatz von Ultraschallmeßgeräten nicht beseitigt werden.
Noch immer mußten bei nachträglich festgestellten Fehlern zu viele
inzwischen hergestellte Fertigteile mit den "fortgelaufenen" Fehlern
ausgesondert werden. Dies hat die Wirtschaftlichkeit der gesamten
Fertigung ständig stark belastet. Nachteilig ist bei diesen bekannten
Verfahren außerdem, daß zwischen dem Wandler und dem zu prüfenden
Teil eine Koppelschicht aus einem flüssigen Medium (Öl, Wasser etc.)
vorhanden sein muß.

Daraus ergab sich die der Erfindung zugrundeliegende Aufgabe, die
in der Schaffung eines Verfahrens zur Ultraschallmessung der Wandstärke von Kunststoffhohlkörpern bestand, mit dem die Nachteile
der nachträglich und verspätet am Fertigteil vorgenommenen Kontrolle
beseitigt werden sollten.

Diese Aufgabe wurde für eine Ultraschallmessung der eingangs genannten
Art erfindungsgemäß dadurch gelöst, daß an einer Stelle oder an mehreren
Stellen in der die Außenkontur des Kunststoffhohlkörpers bestimmenden
Form ein Ultraschall-Meßkopf eingebaut ist, der während des Herstellungsvorganges an den entstehenden Kunststoffhohlkörper ankoppelt und
dessen Wandstärke mißt.

0105020

3

Die Ankoppelung des Meßkopfes erfolgt direkt und trocken am Inneren der Formwand an der Oberfläche des Kunststoffhohlkörpers während des Herstellungsvorganges.

Die Ultraschallmessung wird vorzugsweise nach dem Schließen der Herstellungsform von einem Zeitpunkt ab durchgeführt, an dem sich eine im Herstellungszyklus stets wiederholende Temperatur im Inneren des Kunststoffhohlkörpers eingestellt hat, die so hoch gewählt wird, daß eine Einkopplung der Ultraschallenergie in die Wand des Hohlkörpers gewährleistet ist.

Aus der gemessenen Laufzeit $\Delta t$ der Ultraschallimpulse und aus dem Schallgeschwindigkeitswert $c$ des Kunststoffhohlkörpers bei der entsprechenden Temperatur kann dann mit Hilfe von Gl. (1) die Wandstärke ermittelt werden.

Der so bestimmte Wandstärkenwert wird anschließend mit Hilfe einer elektronischen Soll-Ist-Vergleichseinheit, mit einem vorgegebenen Wanddickenwert verglichen und die Abweichsignale zur Nachregulierung des Extruders nutzbar gemacht, der daraufhin mehr oder weniger Kunststoff in die Fertigungsform einspeist.

Die besonderen Vorteile des erfindungsgemäßen Verfahrens liegen vor allem darin, daß danach auch komplizierteste Kunststoffhohlkörper hergestellt, sofort in der Herstellungsform auf Einhaltung der Soll-Wandstärke kontrolliert und bei Abweichungen der Ausstoß des Extruders automatisch auf die vorgegebene Wandstärke einreguliert wird. Dazu kommen noch die Vorteile der Personal- und Materialeinsparung, der Ausschußverminderung und der Aufzeichnungsfähigkeit der Meßergebnisse, die exakt und ohne Verfälschung gewonnen werden.

4

Weitere Vorteile ergeben sich aus dem nachfolgenden anhand von
Figuren beschriebenen Ausführungsbeispielen.

Es zeigt:

Fig. 1   schematisch eine Prüfanordnung zur Ermittlung der Wandstärke von heißen, in einer Herstellungsform einer Kunststoffblasvorrichtung befindlichen Kunststoffhohlkörpern; und

Fig. 2   eine detaillierte Darstellung der Anordnung des Ultraschall-
Prüfkopfes gemäß Fig. 1.

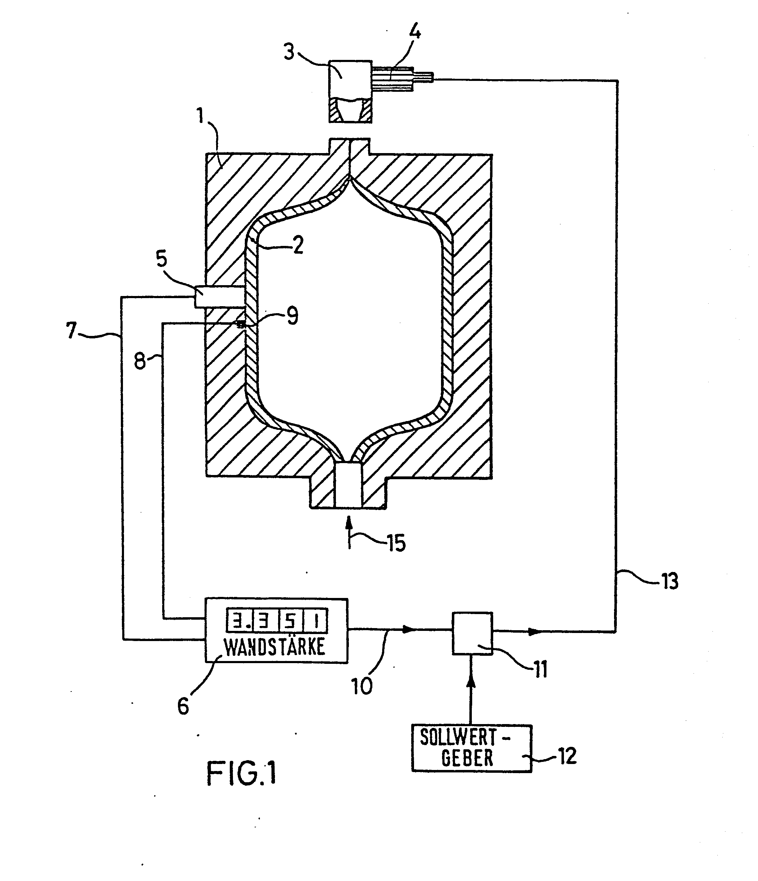

In Fig. 1 ist die (geschlossene) Herstellungsform mit 1 und der heiße
bereits geformte, an der inneren Formwand 14 anliegende Kunststoffhohlkörper mit 2 bezeichnet. Über dem oberen Ende der Form 1 ist
die sogenannte Schlauchdüse 3 angeordnet, deren Öffnung mit Hilfe
eines Stellelementes 4 verändert werden kann. Dadurch ist es möglich
die Wandstärke des Schlauches, der später in der Form 1 zum Kunststoffhohlkörper 2 aufgeblasen wird, zu verändern. Entsprechend ändert
sich dann auch die Wandstärke des Hohlkörpers 2.

Zur Wandstärkenermittlung ist ein  Ultraschallwandler 5 vorgesehen,
der mit einem elektronischen Wanddickenmeßgerät 6 über eine
Leitung 7 verbunden ist. Über die Leitung 8 ist das Wanddickenmeßgerät 6 mit einem Temperaturfühler 9 verbunden. Der jeweils gemessene
Temperaturwert wird in dem Wanddickenmeßgerät 6 digitalisiert und
liegt als Adresse an einem nicht dargestellten Festwertspeicher,
in dem die entsprechenden temperaturabhängigen Schallgeschwindigkeitswerte abgespeichert sind. Aus dem derart gewonnenen Schallgeschwindigkeitswert  c  und der gemessenen Laufzeit $\Delta$t der Ultraschallimpulse,in der Wand des Hohlkörpers 2,berechnet dann das Wanddickenmeßgerät 6 gemäß Gl (1) die Wandstärke D und zeigt diese beispielsweise digital an.

Der Wandstärkenmeßwert D wird ferner über die Leitung 10 einem Soll-Ist-Wert-Vergleicher 11 zugeführt, an dessen zweiten Eingang ein Sollwertgeber 12 liegt. Sobald der vorgegebene Wandstärkenwert (Sollwert) und der gemessene Wandstärkenwert (Istwert) von einander abweichen, liegt am Ausgang des Vergleichers 11 ein entsprechendes Differenzsignal, das über die Leitung 13 an das Stellelement 4 gelangt und damit eine Veränderung der Düsenöffnung der Düse 3 bewirkt.

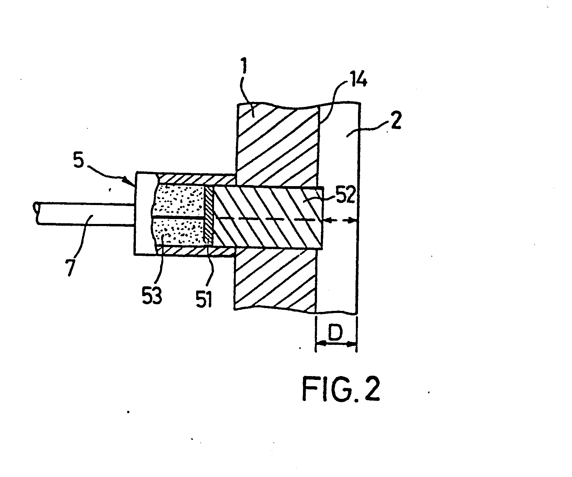

Aus Fig. 2 ist beispielsweise eine mögliche Anordnung des Ultraschallprüfkopfes 5 an der Form 1 ersichtlich. Der Prüfkopf besteht im wesentlichen aus einem piezoelektrischen Element 51, einem zwischen diesem Element und dem Kunststoffhohlkörper 2 befindlichen Vorlaufkörper 52, der aus einem hitzebeständigen Material besteht, sowie aus einem Dämpfungskörper 53.

Es hat sich als vorteilhaft erwiesen, wenn der Vorlaufkörper 52 nicht genau mit der Innenfläche 14 der Herstellform 1 abschließt, damit sich dann ein entsprechender Abdruck des Vorlaufkörpers 52 an der Außenwand des heißen Kunststoffhohlkörpers 2 ausbildet, der auch bei dem erkalteten Hohlkörper gut sichtbar ist und die Stelle markiert, an der die Wandstärkenmessung erfolgte.

Bei einer tatsächlich durchgeführten Prüfung nach der vorliegenden Erfindung handelt es sich um die Wandstärkenüberprüfung von Automobilkraftstofftanks, mit einem Inhalt von 60 Liter, die aus Polyäthylen hergestellt waren. Das Rohmaterial war in bekannter Weise in einem Extruder plastifiziert und in dessen Schlauchformdüse 3 (Fig. 1) zu einem schlauchförmigen Vorformling verformt worden, dessen Wandstärke 8 mm betrug. Der Schlauch wurde in die geöffnete Blasform abgesenkt und diese daraufhin zur Durchführung des Blasvorganges geschlossen.

Zur Kontrolle der Wandstärke  D , die nach
Fertigstellung des Tanks etwa 3 mm betragen
sollte, wurde an einer kritischen Stelle
(z.B. in der Nähe des Einfüllstutzens), ein
Ultraschallmeßkopf 5 in die Form 1  eingebaut.
Dazu diente eine Bohrung , die den Meßkopf 5
mit einem Vorlaufkörper  52 und die elektrischen
Leiter aufnahm.

Nach dem Einbringen des Schlauches in die Form 1
und dem Schließen derselben, wurde das Aufblasen
mit Blasluft 15 von 18° C Temperatur und 6 bar
Druck während 80 s Dauer vorgenommen. Nach dem
ersten Anlegen des Schlauches an die Form-Innenwand 14, zeigte das Wanddickenmeßgerät 6  sofort
einen Wandstärkenwert von 3,12 mm an, der dem
Wert entsprach , der später zur Kontrolle am
fertigen, völlig ausgekühlten Tank mechanisch
nachgemessen wurde.

Mit diesem Verlauf war bestätigt, daß die direkte
Ankoppelung des Ultraschall-Meßkopfes an den
Prüfling in der Form, die bisher als nicht praktikabel erachtet wurde, unter den normalen Bedingungen des Blasverfahrens überraschenderweise
zum Erfolg führt.

Wichtig ist allerdings, daß die Wandstärkenmessung
bei einer Temperatur durchgeführt wird, bei der
der zu prüfende Behälter noch plastisch verformbar
ist, denn es hat sich gezeigt, daß bei verfestigten
Behältern ohne zusätzliches Koppelmittel die Direktankoppelung versagen kann; d.h., daß in diesem
Fallkeine Ultraschallenergie mehr in den zu
prüfenden Behälter gelangt. Bei dem vorstehend beschriebenen Ausführungsbeispiel mußte daher die Wandstärkenmessung bei Temperaturen $>$ 100°C durchgeführt werden (die Temperatur des Tanks, bei Beginn des Spülvorganges, betrug etwa 180° C).

Als vorteilhafte Weiterbildung wurde die Ultraschallmessung dann von einem Zeitpunkt an durchgeführt, an dem sich eine im Herstellungszyklus stets wiederholende Temperatur, im Inneren des aufgeblasenen Tanks, nach oder während des Spülvorganges, in der geschlossenen Blasform hat.

Selbstverständlich kann das erfindungsgemäße Verfahren, etwa zur Herstellung kleinerer Behälter, auch bei Wegfall des Spülvorganges angewendet werden.
Ebenso ist eine Anwendung anstatt beim Kunststoff-Hohlkörperblasen auch beim Spritzblasen, Spritzgießen, Pressen und Tiefziehen möglich.

1 0 5 0 6

28.9.1982

B e z u g s z i f f e r n
_____

| | |
|---|---|
| 1 | Herstellungsform |
| 2 | Kunststoffhohlkörper |
| 3 | Schlauchdüse |
| 4 | Stellelement ( von 3) |
| 5 | Ultraschallwandler |
| 51 | pietzoelektrisches Element |
| 52 | Vorlaufkörper |
| 53 | Dämpfungskörper |
| 6 | Wanddickenmeßgerät |
| 7 | Leitung (zwischen 5 und 6) |
| 8 | Leitung (zwischen 6 und 9) |
| 9 | Temperaturfühler |
| 10 | Leitung (zu 11 und 12) |
| 11 | Soll-Ist-Wert-Vergleicher |
| 12 | Sollwertgeber |
| 13 | Leitung (zwischen 11 und 4) |
| 14 | Innenfläche ( von 1 ) |
| 15 | Blasluft |
| D | Wandstärke |

10    506

E L B A T A I N E R   Kunststoff- und Verpackungsgesellschaft mbH, 7505 Ettlingen

K R A U T K R Ä M E R GmbH ,  5000  Köln - 41

Verfahren zur Ultraschallmessung der Wandstärke

von Kunststoffhohlkörpern

P a t e n t a n s p r ü c h e

1.  Verfahren zur Ultraschallmessung  der Wandstärke von Kunststoffhohlkörpern,
d a d u r c h   g e k e n n z e i c h n e t ,
daß an mindestens einer Stelle in der die Außenkontur des Kunststoffhohlkörpers (2) bestimmenden Form (1) ein Ultraschall-Wandler (5) eingebaut ist, der während des Herstellungsvorganges an den entstehenden Kunststoffhohlkörper (2) ankoppelt und dessen Wandstärke (D) mißt.

2.  Verfahren nach Anspruch 1,
d a d u r c h   g e k e n n z e i c h n e t ,
daß die Ankoppelung des Wandlers (5) direkt und trocken am Inneren der Formwand (14) an der Oberfläche des Kunststoffhohlkörpers(2) während des Herstellungsvorganges erfolgt.

3. Verfahren nach den Ansprüchen 1 und 2,
d a d u r c h   g e k e n n z e i c h n e t ,
daß die Ultraschallmessung nach dem Schließen der Herstellungsform (1) von einem Zeitpunkt ab durchgeführt wird, an dem sich
eine im Herstellungszyklus stets wiederholende Temperatur im
Inneren des Kunststoffhohlkörpers (2) eingestellt hat, die derart hoch gewählt wird, daß eine Einkopplung der Ultraschallenergie in die Wand des Hohlkörpers (2) gewährleistet ist.

4. Verfahren nach den Ansprüchen 1 bis 3,
d a d u r c h   g e k e n n z e i c h n e t ,
daß über einen elektronischen Soll-Ist-Vergleich die gemessenen
Wandstärkenwerte mit vorgegebenen Sollwerten verglichen und die
Abweichsignale zur Nachregulierung der Schlauchdüse (3) einer
Kunststoffverarbeitungsanlage derart nutzbar gemacht werden, daß
die Schlauchdüse (3) daraufhin mehr oder weniger Kunststoff in
die Fertigungsform (1) einspeist.

1 0 5 0 6

28.9.1982

FIG.1

FIG.2

Europäisches
Patentamt

**EUROPÄISCHER RECHERCHENBERICHT**

| **EINSCHLÄGIGE DOKUMENTE** | | | EP 83710053.6 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) | |
| X | GB - A - 2 021 268 (UOP INC.)<br>* Gesamt *<br>-- | 1,2 | G 01 B 17/02 | |
| X | GB - A - 1 370 946 (WAVIN)<br>* Seite 2, Zeilen 11-69;<br>Seite 2, Zeile 96 - Seite 3,<br>Zeile 5; Seite 3, Zeilen<br>42-57, 93-111, 126-129;<br>Seite 4, Zeilen 111-120;<br>Seite 5, Zeile 61 - Seite 6,<br>Zeile 66; Fig. 1,2 *<br>-- | 1,2 | | |
| A | US - A - 3 393 331 (PUCKETT)<br>* Spalte 1, Zeilen 9-12;<br>Spalte 2, Zeilen 1-8;<br>Spalte 4, Zeilen 34-58;<br>Fig. 2 *<br>---- | | **RECHERCHIERTE SACHGEBIETE (Int. Cl. 3)**<br><br>G 01 B<br>G 01 N | |

Der vorliegende Recherchenbericht wurde für alle Patentansprüche erstellt.

| Recherchenort | Abschlußdatum der Recherche | Prüfer |
|---|---|---|
| WIEN | 06-12-1983 | TOMASELLI |